# EUROPEAN PATENT APPLICATION

(11) **EP 0 568 710 A1**
(43) Date of publication of application: **10.11.1993**
(21) Application number: 91850137.0
(22) Date of filing: 23.05.1991
(51) Int. Cl.: B29B 17/02

(54) **Means and method for recycling of plastic materials**

(71) Applicant: Schürer, Johan, S-523 00 Ulricehamn (SE)
(72) Inventor: Schürer, Johan, S-523 00 Ulricehamn (SE)
(74) Representative: Modin, Jan

(57) **Abstract**

This invention relates to a method and an apparatus in the recycling of plastics, by which it becomes possible to handle and to take care of the materials in a plant without preceding sorting into different kinds of plastic. After a possible coarse sorting for removing foreign materials the waste plastic is supplied to an apparatus (5) for disintegration and washing with water containing a grease and oil emulsifying agent. Wash liquid and disintegrated material are then pumped to a tub (10) for separation by means of flotation and sedimentation.

The method is particularly suited for bottles and liquid containers of plastic where a great portion of the material is comprised of polyolefines, which on account of their low density rise to the surface in the tub (10). The recycled material can be dried and granulated to be used in the manufacture of products, e.g. tubes.

## Description

This invention relates to methods in recycling of plastics. The invention also relates to a device for carrying out the method. By the method according to the invention it becomes possible to handle and take care of the materials without preceding sorting into different kinds of plastic, in a recycling plant. The invention is suitable for recycling e.g. of plastic packages for liquids, i.e. bottles and containers of plastics.

In the recycling and processing of plastics difficulties can arise on one hand on account of the fact that the material to be handled consists of different kinds of plastic and on the other hand on account of the fact that the plastic material is not pure. Bottles and other containers often contain residues of the substance which has been packed in them, e.g. oil or similar products which are not soluble in water. To make it possible to recycle such materials it is necessary to divide them into fractions, each of which consists only of one kind of plastic or of several materials which can be mixed with each other without essentially deteriorating the qualities of the end product. Materials which can be mixed with each other are e.g. HD-polyethylene, LD-polyethylene and polypropylene. On the other hand such materials as PVC, polyester and polystyrene should not be mixed with each other or with other plastics.

The object of this invention is to indicate a method and an apparatus which make it possible to divide the recycled plastics into different fractions in a simple way and simultaneously clean the material so that can be recycled. In the method according to the invention recycled plastics, waste plastics, is fed to an apparatus for disintegrating the material into smaller pieces without preceding sorting. In connection with the disintegration water is supplied which contains a suitable emulsifying agent, so that the disintegration simultaneously acts as a washing of the material. Afer that a separation of the different kinds of plastic into individual fractions is carried out by flotation and sedimentaion in the washing liquid. Subsequently the recycled fractions can be washed further, after which they are dried and transformed into a suitable form for further treatment, e.g. through granulation in a conventional granulation equipment.

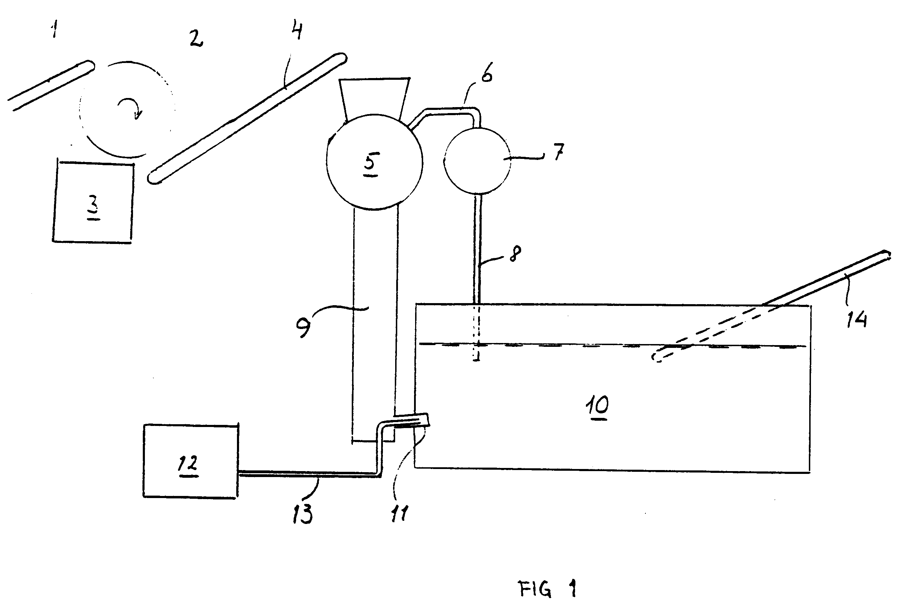

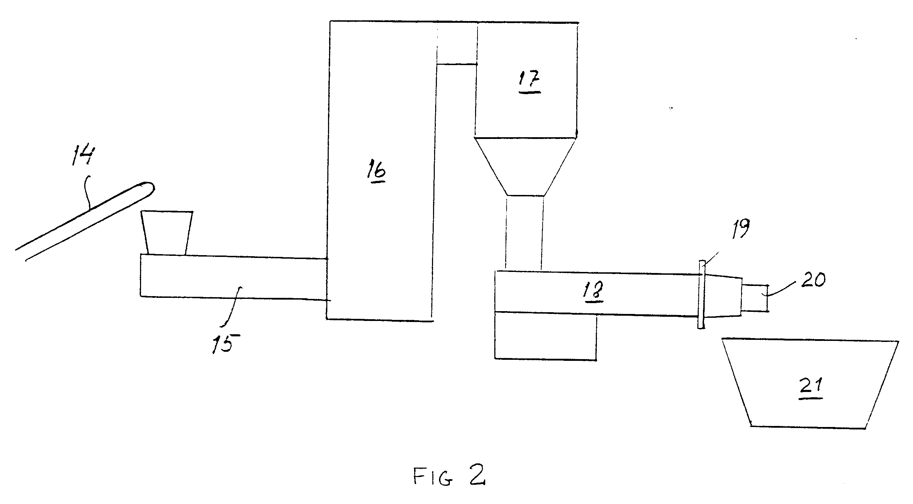

The invention will be more particularly described in the following in connection with an example shown in Figs. 1 and 2. Fig. 1 illustrates the plant from the waste plastic inlet to the tub or basin, inclusive, in which the flotation and the sedimentation take place. Fig. 2 illustrates the subsequent handling with transportation, drying and granulation of the recycled material.

The waste plastics are supplied to the plant through a conveyor 1. Before that a certain coarser sorting may have taken place which, however, is intended only to remove cardboard, wood and the like, while no sorting into different kinds of plastic takes place. Through the conveyor 1 the material is supplied to a magnetic separator 2 for separation of magnetic metallic materials which are collected in the container 3. After that the material is advanced through the conveyor 4 up to a device for disintegration of the waste plastics. This device is suitably comprised of a granulation mill 5. Through the pump 7 and the conduit 6 there is introduced into the granulation mill water containing a suitable grease and oil emulgating substance for the cleaning of tile material in connection with the disintegration. The added liquid quantity in relation to the quantity of plastics may vary within wide limits, depending, among other things, on the subsequent flotation and sedimentation process, as will be described in the following. Through a conduit 9 and a nozzle 11 the mixture of disintegrated plastics and water is supplied to a tub or basin 10, in which the separation into different kinds of plastic takes place. The supply is suitably carried out by means of some form of pumping, so that the liquid flows out into the basin 10 with a certain velocity in the longitudinal direction of the tub. This may be brought about in different ways, and in Fig. 1 there is illustrated an ejector device 11 intended for this purpose which through a conduit 13 is supplied with compressed air from a compressor 12. An ejector can be suitable in many cases, since it brings about a certain circulation of the liquid in the tub 10 and improves the washing efficiency, i.e. cleaning of the plastics. However, some other kind of pump of a conventional kind may be substituted for the ejector, the pumping, however, being carried out without any air supply.

The different materials are separated from each other through flotation and sedimentation in a tub or basin 10. Essential factors in this process are the density of the plastic materials and of the liquid in the tub as well as the flow of liquid in the tub. In the first instance a separation in dependence of different densities of the plastic materials is carried out. In the embodiment illustrated here the tub is supposed to be filled with water containing a suitable emulsifying agent for grease and oil, as mentioned above. This liquid has a density which very closely equals 1. Polyolefines, such as polyethylene of different kinds and polypropylene have a density which is comprised between 0,90 and 0,96 and consequently rises to the surface of the liquid. Other materials, such as PVC and polyesters e.g. have a density above 1, and consequently sink to the bottom. The sinking velocity is very dependent of the density of the materials, and accordingly a separation of heavier materials into different fractions can be attained by supplying the materials to the tub through nozzles 11 with a suitable velocity and direction. This separation into fractions is influenced by the flows of liquid in the tub, which may be governed by the design of the tub and the design of the inlet and the outlet from the tub. Generally, an even flow of liquid in the longitudinal direction from the inlet to an outlet located in the opposite end of the tub is aimed at. From here the liquid may be pumped in a circulatory motion, or alternatively the liquid pumped out may first be subjected to some form of refinement or conditioning. These devices are not illustrated in the drawing, since they do not constitute part of the invention. The discharge of liquid for the supply to the disintegrator can take place either through a tube 8 immersed in the liquid and coupled directly to the pump 9, or in another suitable way.

On account of the different densities of the materials a separation takes place in the tub, the polyolefine material rising to the surface of the liquid. Since these materials generally are fully mixable with each other, they do not have to be separated further for subsequent processing. They are removed from the liquid surface, e.g. by means of a conveyor 14. This can have its one end submerged into the liquid, and if the liquid flow is governed in a suitable way, the material on the liquid surface is advanced to the conveyor. Heavier material is collected on the bottom of the tub, material having the greatest density sinking to the bottom most rapidly. Closest to the nozzle 11 therefore PVC having a density of 1,4 or less is accumulated. Other materials, such as polyester and polyamide sink to the bottom in a greater distance from the nozzle 11 in the direction of the flow of liquid. These materials are removed from the bottom of the tub in a suitable way by means of conventional devices which are not illustrated in the drawing, since they do not form part of the invention. Material which is removed from the tub through the conveyor 14 is fed into a drying tower 16 by means of a screw conveyor 15.

The dried material is fed through a cyclone 17 to an extruder 18 for remelting and redyeing and subsequent granulation in the granulation nozzle 20. By means of a filter 19 which may be located before the granulation nozzle 20 possible unmelted particles of foreign material are collected. The recycled material in the form of granules is finally collected in the container 21. This material can then be utilized for the manufacture of different products, e.g. tubes for drainage and transportation of liquids. Materials collected from the bottom of the tub 10 is processed in a similar way in individual plants.

## Claims

1. Method in the recycling of plastics, which may contain different kinds of plastic, such as polyolefines, PVC, polyamide and polyester, **characterized** in that the material is disintegrated into smaller pieces in an apparatus adapted for this purpose, and that the different materials subsequently are separated from each other by flotation and sedimentation in a liquid.

2. Method according to claim 1, **characterized** in that the liquid is comprised of water containing an emulsifying agent for grease and oil for the cleaning of the plastics in connection with the disintegration.

3. Method according to claim 1 or 2, **characterized** in that part of the liquid is supplied to the plastics before the disintegration.

4. Method according to claim 3, **characterized** in that before the disintegration liquid is supplied in such an amount, that the mixture of liquid and disintegrated material can be pumped.

5. Apparatus for recycling of plastic material comprising different kinds of plastics, such as polyolefines, PVC, polyamide and polyester, **characterized** by the provision of means for disintegrating the material, means for separating the disintegrated material by flotation and sedimentation in a liquid, and means for supplying part of this liquid to the disintegration means.

6. All individual means, methods, utilizations and other features, taken individually and in arbitrary combinations with each other, which are directly or indirectly apparent from the above description and/or the annexed drawings.
